# EUROPEAN PATENT APPLICATION

(11) **EP 4 498 718 A1**
(43) Date of publication of application: **29.01.2025**
(21) Application number: 24189229.8
(22) Date of filing: 17.07.2024
(51) Int. Cl.: H04W 8/20, H04W 4/70, H04W 4/80

(54) **METHOD FOR UPDATING EMBEDDED SUBSCRIBER IDENTITY MODULE CONFIGURATION PROFILE AND CUSTOMER PREMISE EQUIPMENT**

(30) Priority: 25.07.2023 CN 202310920055
(71) Applicant: Sernet (Suzhou) Technologies Corporation, Suzhou, Jiangsu (CN); Sercomm Corporation, Nangkang T'ai pei 115 (TW)
(72) Inventor: WANG, Meng, Suzhou Industrial Park, Jiangsu (CN); SUN, Chaoyang, Suzhou Industrial Park, Jiangsu (CN)
(74) Representative: Becker, Eberhard

(57) **Abstract**

Provided in the embodiments of the disclosure are a method for updating an embedded subscriber identity module (eSIM) configuration profile and a related customer premise equipment (100). The method includes: transmitting a Bluetooth identification signal corresponding to the customer premise equipment (100); in response to a Bluetooth pairing operation initiated by a mobile device (110), establishing a Bluetooth connection with the mobile device (110); visiting a subscription manager data preparation server (140) by using a transmission control protocol/Internet protocol (TCP/IP) network provided by the mobile device (110) through the Bluetooth connection, and obtaining a configuration profile corresponding to an eSIM chip (106) from the subscription manager data preparation server (140); and updating the eSIM chip (106) based on the configuration profile of the eSIM chip (106). This provides a more convenient management operation method for management personnel.

## Description

### BACKGROUND

### Technical Field

The disclosure relates to a management technique for an embedded subscriber identity module (eSIM), and in particular to a method for updating an eSIM setting file and a related customer premise equipment.

### Description of Related Art

An embedded subscriber identity module (eSIM) is an electronic SIM card, which includes profiles that can be downloaded to terminal equipment through a network. Moreover, there is no difference between an eSIM and a physical SIM card in terms of functionality. With an eSIM, various electronic products can be used to connect to the internet, make calls, and send text messages. Thus, eSIMs are commonly used in customer premise equipment (CPE) in the art, so that the CPE provides related network functions.

Generally, when the CPE is manufactured, an eSIM chip in the CPE does not contain any related data. Thus, it is necessary to update the eSIM chip in the customer premise equipment through specific means to store the related configuration profile, so that the CPE accesses a carrier network according to the eSIM to use the related network functions. The CPE (especially the outdoor CPE) is usually placed in a location with good reception but not easily accessible, resulting in inconvenience in work related to eSIM management and maintenance.

In the art, there are several methods commonly used to update the eSIM profile in the CPE, one of which is to command the CPE to obtain a required configuration profile from a related server through a wired Ethernet network in the condition of the CPE being connected to a network cable, thereby updating the configuration profile stored in the eSIM chip in the CPE. However, this method requires connecting the network cable to a maintenance network port of the CPE, which is inconvenient for the related personnel.

Another method involves activating a wireless network function of the CPE through a user interface of the CPE when the related personnel intends to update the eSIM configuration profile. Through this method, the related personnel connect the CPE to a WiFi hotspot network shared by other electronic devices, thereby connecting the CPE to a related server so as to obtain the required configuration profile and then perform a corresponding update. However, this method requires operating a WiFi-related connection program near the CPE, but the CPE is often not easily accessible. Thus, the complexity of a CPE update program increases correspondingly.

### SUMMARY

In the light of this, the embodiments of the disclosure provide a method for updating an embedded subscriber identity module configuration profile and a related customer premise equipment, which can be used to solve the aforementioned technical problems.

The embodiments of the disclosure provide a method for updating an embedded subscriber identity module configuration profile. The method is adapted for a customer premise equipment. The method includes the following steps. A Bluetooth identification signal corresponding to the customer premise equipment is transmitted. In response to a Bluetooth pairing operation initiated by a mobile device, a Bluetooth connection with the mobile device is established. A subscription manager data preparation server is visited by using a transmission control protocol/Internet protocol network provided by the mobile device through the Bluetooth connection, and a configuration profile corresponding to an embedded subscriber identity module chip is obtained from the subscription manager data preparation server. The embedded subscriber identity module chip is updated based on the configuration profile of the embedded subscriber identity module chip.

The embodiments of the disclosure provide a customer premise equipment. The customer premise equipment includes an embedded subscriber identity module chip, a Bluetooth module, and a processor. The processor is coupled to the Bluetooth module and the embedded subscriber identity module chip, and is configured to perform the following steps. A Bluetooth identification signal corresponding to the customer premise equipment is transmitted. In response to a Bluetooth pairing operation initiated by a mobile device, a Bluetooth connection with the mobile device is established. A subscription manager data preparation server is visited by using a transmission control protocol/Internet protocol network provided by the mobile device through the Bluetooth connection, and a configuration profile corresponding to an embedded subscriber identity module chip is obtained from the subscription manager data preparation server. The embedded subscriber identity module chip is updated based on the configuration profile of the embedded subscriber identity module chip.

Based on the above, a technical solution in the embodiments of the disclosure provides a more convenient management operation method for management personnel.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 shows a schematic diagram of an application scenario according to the embodiments of the disclosure.
FIG. 2 shows a method for updating an embedded subscriber identity module configuration profile according to the embodiments of the disclosure.

### DESCRIPTION OF THE EMBODIMENTS

Reference will now be made in detail to the exemplary embodiments of the present invention, examples of which are illustrated in the accompanying drawings. Wherever possible, the same reference numbers are used in the drawings and the description to refer to the same or like parts.

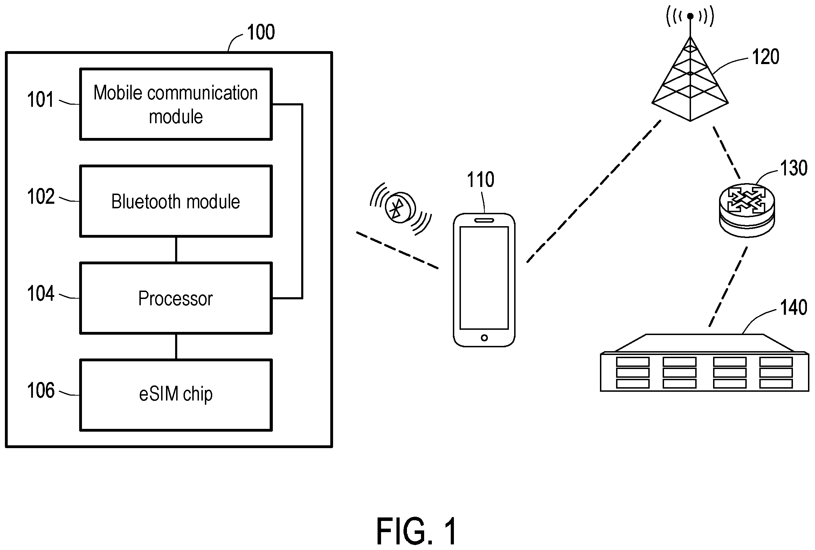

Please refer to FIG. 1, which shows a schematic diagram of an application scenario according to the embodiments of the disclosure. In an embodiment shown in FIG. 1, a customer premise equipment (CPE) 100 accesses a subscription manager data preparation (SM-DP) server 140 through a base station 120 (e.g., eNB and/or gNB) and a router 130 by using a Bluetooth hotspot network provided by a mobile device 110 so as to obtain a required configuration profile of an embedded subscriber identity module (eSIM) chip to perform an update.

In addition, a technical solution provided in the embodiment of the disclosure enables the CPE 100 to automatically establish a Bluetooth connection with the mobile device, and provide an equipment information stored in the eSIM chip to the mobile device through the Bluetooth connection. The management personnel of the CPE can perform the required management operations on the eSIM chip on the CPE through the mobile device conveniently (e.g., controlling the CPE to download the configuration profile of the eSIM chip and update the eSIM chip accordingly).

The CPE 100 includes a mobile communication module 101, a Bluetooth module 102, a processor 104, and an eSIM chip 106, wherein the processor 104 may be coupled to the mobile communication module 101, the Bluetooth module 102, and the eSIM chip 106.

In the embodiment of the disclosure, the mobile communication module 101 may be, for example, a communication circuit/device that transmits data according to various communication system protocols. The mobile communication module 101 may be controlled by the processor 104. The mobile communication module 101 may include a transmitter circuit, a receiver circuit, an analog-to-digital (A/D) converter, a digital-to-analog (D/A) converter, a low noise amplifier (LNA), a mixer, a filter, a matching circuit, a transmission line, a power amplifier (PA), one or more antenna units, a local storage media, and other elements to provide the CPE 100 with related mobile communication functions. In different embodiments, the communication systems may include, for example, Global System of Mobile communication (GSM) systems, code division multiple access (CDMA) systems, wideband code division multiple access (WCDMA) systems, General Packet Radio Service (GPRS) systems, long term evolution (LTE) systems, advanced long term evolution (LTE-A) systems, new radio (NR) systems, evolution systems of NR systems, LTE-based access to unlicensed spectrum (LTE-U) systems, NR-based access to unlicensed spectrum (NR-U) systems, Non-Terrestrial Networks (NTN) systems, universal mobile telecommunication systems (UMTS), wireless local area networks (WLAN), wireless fidelity (WiFi), 5th-generation (5G) systems, Narrowband Internet of Things (NB-IoT), or other communication systems.

In an embodiment, the Bluetooth module 102 may be controlled by the processor 104. The mobile communication module 101 may include a transmitter circuit, a receiver circuit, an analog-to-digital (A/D) converter, a digital-to-analog (D/A) converter, a low noise amplifier (LNA), a mixer, a filter, a matching circuit, a transmission line, a power amplifier (PA), one or more antenna units, a local storage media, and other elements to provide the CPE 100 with related Bluetooth communication functions.

In different embodiments, the processor 104 may be a general-purpose processor, a special-purpose processor, a conventional processor, a digital signal processor, multiple microprocessors, one or more microprocessors combined with digital signal processor cores, a controller, a microcontroller, an application-specific integrated circuit (ASIC), a field-programmable gate array (FPGA), an integrated circuit of any other types, a state machine, an advanced RISC machine (ARM) processor, and the like.

The eSIM chip 106 may be implemented by adopting suitable integrated circuits. A storage device is included to store a configuration profile of the eSIM chip 106 and other information, enabling the CPE 100 to access a mobile network through the mobile communication module 101 according to the eSIM chip 106.

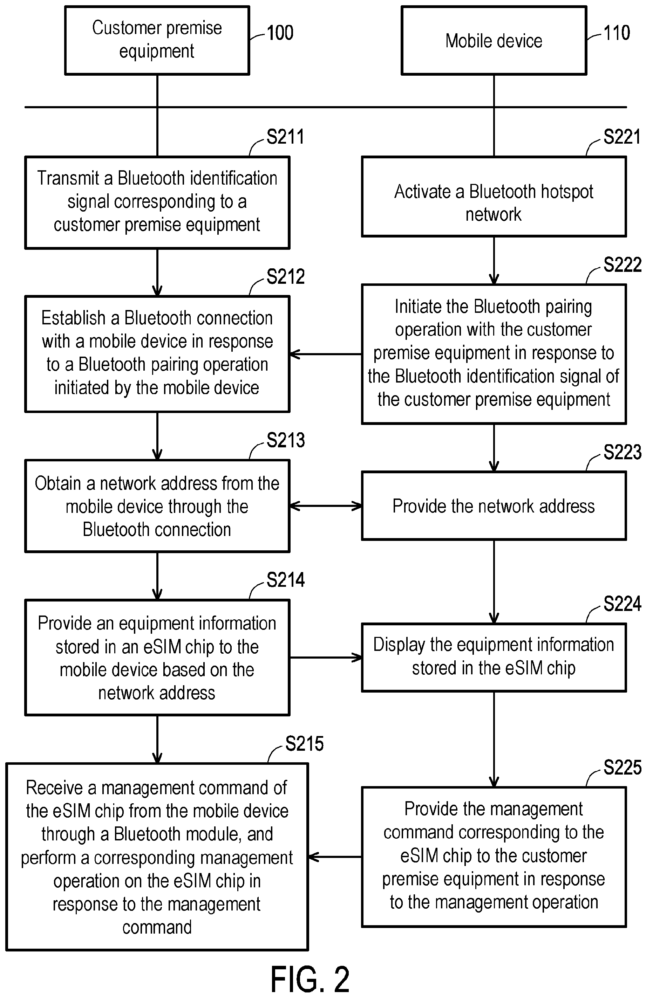

In the embodiment of the disclosure, the CPE 100 may visit related servers (e.g., SM-DP servers) through the Bluetooth hotspot network provided by a mobile device (e.g., smartphone, tablet, mobile router, or other similar intelligent devices and/or computer devices). Afterwards, the CPE 100 obtains a required eSIM configuration profile from the server again to perform the corresponding update. In addition, the related management personnel of the CPE 100 may perform the necessary management operation (e.g., at least one of the inquiry operation, opening operation, closing operation, deleting operation, and downloading operation) on the eSIM chip 106 through the mobile device. In addition, the CPE 100 may provide an equipment information related to the eSIM chip 106 to the mobile device through the method shown in FIG. 2.

Please refer to FIG. 2, which shows a method for updating an embedded subscriber identity module configuration profile according to the embodiments of the disclosure. The method in this embodiment may be implemented with both the mobile device 110 and the CPE 100. The following detailed description of each step in FIG. 2 is provided with the elements shown in FIG. 1.

In Step S211, the processor 104 controls the Bluetooth module 102 to transmit a Bluetooth identification signal corresponding to the CPE 100. In an embodiment, the Bluetooth identification signal corresponding to the CPE 100 is a service set identifier (SSID) of the Bluetooth module 102, and the Bluetooth module 102 may transmit the Bluetooth identification signal periodically.

In Step S221, the mobile device 110 activates the Bluetooth hotspot network. In an embodiment, the management personnel may activate the Bluetooth hotspot network of the mobile device 110 through a built-in settings interface of the mobile device 110. In another embodiment, a specific application for managing/controlling/operating the CPE 100 may also be installed in the mobile device 110. The specific application may be designed with functions related to activating the Bluetooth hotspot network of the mobile device 110.

In an embodiment, after the mobile device 110 activates the Bluetooth hotspot network, the mobile device 110 scans for a Bluetooth identification signal transmitted from a nearby device and initiates a Bluetooth pairing operation accordingly.

For example, if the mobile device 110 is located in a signal coverage area of the Bluetooth module 102, the mobile device 110 receives the Bluetooth identification signal transmitted (e.g., through broadcasting) from the Bluetooth module 102 correspondingly after activating the Bluetooth hotspot network. In this case, in Step S222, the mobile device 110 may initiate the Bluetooth pairing operation with the CPE 100 in response to the Bluetooth identification signal of the CPE 100. In other words, the Bluetooth identification signal transmitted from the Bluetooth module 102 triggers the mobile device 110 to initiate the Bluetooth pairing operation with the CPE 100.

Correspondingly, in Step S212, the processor 104 establishes a Bluetooth connection with the mobile device 110 in response to the Bluetooth pairing operation initiated by the mobile device 110.

In an embodiment, in response to a Bluetooth pairing request received from the mobile device 110, the processor 104 may perform a Bluetooth pairing operation with the mobile device 110 based on the Bluetooth pairing request and initiate a Bluetooth connection establishment request to the mobile device 110. The Bluetooth connection establishment request may be used to request the mobile device 110 to establish the Bluetooth connection using a Bluetooth network encapsulation protocol (BNEP). In other words, the processor 104 may establish a BNEP connection with the mobile device 110 in response to the Bluetooth pairing request from the mobile device 110.

In Step S213, the processor 104 controls the Bluetooth module 102 to obtain a network address from the mobile device 110 through the Bluetooth connection. The mobile device 110 provides the network address correspondingly in Step S223. Thus, the CPE 100 can use the network provided by the mobile device 110 through the Bluetooth connection, thereby visiting the SM-DP server and other related servers.

In an embodiment, the CPE 100 may request the mobile device 110 to provide the network address through the Bluetooth connection based on a dynamic host configuration protocol (DHCP). Afterwards, the CPE 100 receives a DHCP response from the mobile device 110 and obtains the network address provided by the mobile device 110 from the DHCP response.

In addition, the CPE 100 may request (based on the DHCP) the mobile device 110 to provide and/or assign at least one of a gateway address (e.g., the IP address of a gateway), a domain name system (DNS) server address (e.g., the IP address of a DNS server), and a network address of the CPE 100 (e.g., the IP address of the CPE 100) as the network address in Step S213.

Afterwards, in Step S214, the processor 104 controls the Bluetooth module 102 to provide the equipment information stored in the eSIM chip 106 to the mobile device 110 based on the network address. The equipment information stored in the eSIM chip 106 may include an embedded identity document (EID), an International Mobile Equipment Identity (IMEI), etc.

In an embodiment, the CPE 100 may provide the equipment information stored in the eSIM chip 106 to the mobile device 110 over the Bluetooth connection through a predefined Restful application programming interface (API). In another embodiment, a corresponding socket may be designed between the CPE 100 and the mobile device 110, so that the CPE 100 provides the equipment information stored in the eSIM chip 106 to the mobile device 110.

In an embodiment, after receiving the equipment information provided by the CPE 100, the mobile device 110 may provide a corresponding response message to the CPE 100.

After the CPE 100 provides the equipment information stored in the eSIM chip 106 to the mobile device 110, the mobile device 110 correspondingly displays the equipment information stored in the eSIM chip 106 in Step S224. Based on this, the management personnel can see the information related to the eSIM chip 106 in the specific application, and perform the necessary management operation on the eSIM chip 106 through the specific application.

In an embodiment, the management personnel may, for example, perform at least one of the management operations such as the inquiry operation, opening operation, closing operation, deleting operation, and downloading operation on the eSIM chip 106 through the specific application.

Correspondingly, in Step S225, the mobile device 110 may provide a management command corresponding to the eSIM chip 106 to the CPE 100 in response to the management operation that the management personnel required.

In Step S215, the processor 104 receives the management command of the eSIM chip 106 from the mobile device 110 through the Bluetooth module 102, and performs the corresponding management operation on the eSIM chip 106 in response to the management command.

In an embodiment, if the management command indicates that the management personnel intends to perform the download operation corresponding to the configuration profile of the eSIM chip 106, the processor 104 may use the TCP/IP network provided by the mobile device 110 through the Bluetooth connection so as to visit the SM-DP server and obtain the configuration profile corresponding to the eSIM chip 106 from the SM-DP server. Afterwards, the processor 104 may update the information stored in the eSIM chip 106 based on the downloaded configuration profile, thereby accessing the mobile network through the mobile communication module 101.

In some embodiments, the configuration profile may include, for example, activation codes, Switched Multi-megabit Data Service (SMDS), SMDP+, etc.

As a result, the management personnel can manage the CPE 100 more conveniently as connecting a network cable to a maintenance network port of the CPE 100 is not required. Moreover, the CPE 100 does not require the disposition of an additional related operation interface (e.g., a WiFi operation interface). Thus, the required implementation cost and complexity are reduced correspondingly.

In an embodiment, if the management command indicates that the management personnel intends to perform the inquiry operation corresponding to the eSIM chip 106, the processor 104 may correspondingly return the related information stored in the eSIM chip 106 to the mobile device 110, so that the management personnel can view the information through the specific application.

In an embodiment, if the management command indicates that the management personnel intends to perform the opening operation or the closing operation corresponding to the eSIM chip 106, the processor 104 may correspondingly dispose the eSIM chip 106 so that the eSIM chip 106 starts or stops providing communication functions.

In an embodiment, if the management command indicates that the management personnel intends to perform the deleting operation corresponding to the eSIM chip 106, the processor 104 may correspondingly delete the related profiles stored in the eSIM chip 106.

The methods in Steps S214, S224, S215, and S225 may also be simplified to reduce manual operations. In another embodiment, when the processor 104 of the CPE 100 identifies failure in accessing the mobile network according to the equipment information stored in the eSIM chip 106, the processor 104 proactively uses the TCP/IP network provided by the mobile device 110 through the Bluetooth connection so as to visit the SM-DP server 140 and obtain the configuration profile corresponding to the eSIM chip 106 from the SM-DP server 140. Afterwards, the processor 104 may update the equipment information stored in the eSIM chip 106 based on the downloaded configuration profile, thereby accessing the mobile network through the mobile communication module 101.

In an embodiment, the processor 104 may proactively use the TCP/IP network provided by the mobile device 110 through the Bluetooth connection so as to visit the SM-DP server 140 and obtain the configuration profile corresponding to the eSIM chip 106 from the SM-DP server 140 in any scenario specified by a designer. Afterwards, the processor 104 may update the equipment information stored in the eSIM chip 106 based on the downloaded configuration profile, thereby accessing the mobile network through the mobile communication module 101.

In summary, the disclosure can be applied to LTE/5G CPE, home gateways, enterprise gateways, enterprise intelligent monitoring integrated systems, and indoor and outdoor integrated omnidirectional positioning systems, providing management personnel with a more convenient method for management operations.

## Claims

1. A method for updating an embedded subscriber identity module configuration profile, adapted for a customer premise equipment (100), comprising:
transmitting, by the customer premise equipment (100), a Bluetooth identification signal corresponding to the customer premise equipment (100);
in response to a Bluetooth pairing operation initiated by a mobile device (110), establishing, by the customer premise equipment (100), a Bluetooth connection with the mobile device (110);
visiting, by the customer premise equipment (100), a subscription manager data preparation server (140) by using a transmission control protocol network or an Internet protocol network provided by the mobile device (110) through the Bluetooth connection, and obtaining a configuration profile corresponding to an embedded subscriber identity module chip (106) from the subscription manager data preparation server (140); and
updating, by the customer premise equipment (100), the embedded subscriber identity module chip (106) based on the configuration profile of the embedded subscriber identity module chip (106).

2. The method of claim 1, further comprising:
obtaining, by the customer premise equipment (100), a network address from the mobile device (110) through the Bluetooth connection; and
providing, by the customer premise equipment, an equipment information of the embedded subscriber identity module chip (106) to the mobile device (110) based on the network address.

3. The method of claim 1, wherein in response to the Bluetooth pairing operation initiated by the mobile device (110), establishing the Bluetooth connection with the mobile device (110) comprises:
in response to determining a Bluetooth pairing request received from the mobile device (110), performing, by the customer premise equipment (100), the Bluetooth pairing operation with the mobile device (110) based on the Bluetooth pairing request and initiating a Bluetooth connection establishment request to the mobile device (110), wherein the Bluetooth connection establishment request is for requesting the mobile device (110) to establish the Bluetooth connection using a Bluetooth network encapsulation protocol.

4. The method of claim 2, wherein after providing the equipment information of the embedded subscriber identity module chip (106) to the mobile device (110) based on the network address, the method further comprises:
receiving, by the customer premise equipment (100), a management command related to the embedded subscriber identity module chip (106) from the mobile device (110); and
in response to the management command, executing, by the customer premise equipment (100), a corresponding management operation on the embedded subscriber identity module chip (106),
wherein the management command comprises at least one of an inquiry operation, an opening operation, a closing operation, a deleting operation, and a downloading operation related to the embedded subscriber identity module chip (106).

5. The method of claim 2, wherein providing the equipment information of the embedded subscriber identity module chip (106) to the mobile device (110) based on the network address further comprises:
providing, by the customer premise equipment (100), the equipment information of the embedded subscriber identity module chip (106) to the mobile device (110) over the Bluetooth connection through a predefined Restful application programming interface.

6. A customer premise equipment (100), comprising:
an embedded subscriber identity module chip (106);
a Bluetooth module (102);
a processor (104), coupled to the Bluetooth module (102) and the embedded subscriber identity module chip (106), and configured to:
transmit a Bluetooth identification signal corresponding to the customer premise equipment (100);
in response to a Bluetooth pairing operation initiated by a mobile device, establish a Bluetooth connection with the mobile device (110);
visit a subscription manager data preparation server (140) by using a transmission control protocol network or an Internet protocol network provided by the mobile device (110) through the Bluetooth connection, and obtain a configuration profile corresponding to the embedded subscriber identity module chip (106) from the subscription manager data preparation server (140); and
update the embedded subscriber identity module chip (106) based on the configuration profile of the embedded subscriber identity module chip (106).

7. The customer premise equipment (100) of claim 6, wherein the processor (104) is further for:
obtaining a network address from the mobile device (110) through the Bluetooth connection; and
providing an equipment information of the embedded subscriber identity module chip (106) to the mobile device (110) based on the network address.

8. The customer premise equipment (100) of claim 6, wherein the processor (104) is for:
in response to determining a Bluetooth pairing request received from the mobile device (110), performing the Bluetooth pairing operation with the mobile device (110) based on the Bluetooth pairing request and initiating a Bluetooth connection establishment request to the mobile device (110), wherein the Bluetooth connection establishment request is for requesting the mobile device (110) to establish the Bluetooth connection using a Bluetooth network encapsulation protocol.

9. The customer premise equipment (100) of claim 7, wherein after providing the equipment information of the embedded subscriber identity module chip (106) to the mobile device (110) based on the network address, the processor (104) is further for:
receiving a management command related to the embedded subscriber identity module chip (106) from the mobile device (110); and
in response to the management command, executing a corresponding management operation on the embedded subscriber identity module chip (106),
wherein the management command comprises at least one of an inquiry operation, an opening operation, a closing operation, a deleting operation, and a downloading operation related to the embedded subscriber identity module chip (106).

10. The customer premise equipment (100) of claim 6, wherein the processor (104) is for:
providing an equipment information of the embedded subscriber identity module chip (106) to the mobile device (110) over the Bluetooth connection through a predefined Restful application programming interface.
